# EUROPÄISCHE PATENTSCHRIFT

(11) **EP 1 190 273 B1**
(45) Veröffentlichungstag und Bekanntmachung des Hinweises auf die Patenterteilung: **08.08.2007**
(21) Anmeldenummer: 01942980.2
(22) Anmeldetag: 30.04.2001
(51) Int. Cl.: G02C 13/00

(54) **MESSGERÄT ZUR ERMITTLUNG DES FASSUNGSSCHEIBENWINKELS EINER BRILLENFASSUNG**
MEASURING DEVICE FOR MEASURING THE ANGLE BY WHICH A LENS IS TILTED WITH RESPECT TO A HORIZONTAL TANGENT TOWARDS THE CENTER OF THE BRIDGE OF A SPECTACLE FRAME
APPAREIL DE MESURE PERMETTANT DE DETERMINER L'ANGLE D'INCLINAISON D'UN VERRE DE MONTURE PAR RAPPORT A LA TANGENTE HORIZONTALE AU CENTRE DU PONT D'UNE MONTURE DE LUNETTES

(30) Priorität: 28.04.2000 DE 10020844
(43) Veröffentlichungstag der Anmeldung: 27.03.2002
(73) Patentinhaber: Rodenstock GmbH, 80469 München (DE)
(72) Erfinder: FUHRMANN, Jörg, 82205 Gilching (DE)
(74) Vertreter: Müller-Boré & Partner Patentanwälte
(86) Internationale Anmeldenummer: PCT/DE2001/001606
(87) Internationale Veröffentlichungsnummer: WO 2001/084221

(56) Entgegenhaltungen:
- CH-A- 89 837
- DE-A- 3 013 960
- DE-U- 9 303 942
- FR-A- 2 384 232
- US-A- 1 484 365

## Beschreibung

### Technisches Gebiet

Die Erfindung bezieht sich auf ein Meßgerät zur Ermittlung des Fassungsscheibenwinkels einer Brillenfassung.

Durch die Fortschritte in der Rechnertechnik und durch die Entwicklung automatischer Optimierungsprogramme für Brillengläser mit progressiver Wirkung sowie durch die Entwicklung von hochflexiblen numerisch gesteuerten Schleif- und Poliermaschinen ist es möglich geworden, Brillengläser zu berechnen und zu fertigen, von denen jedes entsprechend den individuellen Daten eines bestimmten Brillenträgers gefertigt ist. Bekannt ist es als individuelle Daten neben den üblichen Rezeptwerten den Pupillenabstand, die Augenlänge, die Vorneigung und Durchmuschelung, Längen- bzw. Brechwertametropie, Vertikal- und/oder Horizontalprismen sowie deren Aufteilung rechts/links, die Größe und/oder die Form der gewählten Fassung, die Zentrierhöhe, die Pupillendurchmesser und/oder Vorneigung der Gläser bei der Berechnung der progressiven Fläche(n) zu berücksichtigen.

Wenn man den Sitz der von einem bestimmten Brillenträger ausgewählten vorangepassten Korrektionsfassung in die Optimierung der Gleitsichtgläser mit einbezieht, wird es erforderlich, Abstände und Winkel der Korrektionsfassung zum Gesicht des Brillenträgers zu messen.

Erfindungsgemäß ist erkannt worden, daß die Durchbiegung der Brücke und damit die Verkippung der Gläserringe einen so großen Einfluß auf den Astigmatismus schiefer Bündel hat, daß dieser im Rahmen einer individuellen Optimierung berücksichtigt werden muß. Damit ist es erforderlich, den sogenannten Fassungsscheibenwinkel zu messen. Der Fassungsscheibenwinkel beschreibt die seitliche Verkippung der Einzelglaseinfassung vor dem Auge des Brillenträgers.

### Stand der Technik

Für die Messung des Fassungsscheibenwinkels, also des Winkels um den die Einzelglaseinfassung (Fassungsscheibe) gegenüber der "horizontalen Tangente" an den Mittelpunkt der Brücke der Fassung verkippt ist, ist bis dato noch kein Meßmittel bekannt, welches diesen Winkel speziell messen kann. Die in der Literatur beschriebenen Meßmittel dienen ausschließlich zur Messung der Fassungsdurchbiegung.

In der Broschüre "Anatomische Brillenanpassung" von Johannes Eber von 1987 des Verlages Optische Fachveröffentlichungen GmbH Heidelberg, wird die Tatsache, daß eine Brillenfassung bei größeren Scheiben eine gewisse Durchbiegung hat, beschrieben. In dieser Broschüre wird lediglich auf die Art und Weise der Fassunganpassung, nicht jedoch auf den Einfluß dieser Durchbiegung auf die optischen Eigenschaften des Brillenglases eingegangen.

CH 89 847 A offenbart ein Winkelmeßgerät mit einer Grundplatte, an welcher eine Winkelskala angeordnet ist und einem Zeiger, der um einen Drehpunkt drehbar gelagert ist. Mittels der Winkelskala kann ein Winkel zwischen dem Zeiger und einer Basislinie der Grundplatte gemessen werden.

### Darstellung der Erfindung

Der Erfindung liegt die Aufgabe zugrunde, ein Meßgerät zur Ermittlung des Fassungsscheibenwinkels einer Brillenfassung bereitzustellen.

Eine erfindungsgemäße Lösung dieser Aufgabe ist im Patentanspruch 1 angegebenen. Weiterbildungen der Erfindung sind Gegenstand des Anspruchs 2.

Erfindungsgemäß wird ein Meßgerät mit einer Auflage geschaffen, auf die das Brillenglas mit dem oberen oder dem unteren Nutengrund des Gläserrings auflegbar ist. Die Auflage bzw. die entsprechende Grundplatte weist eine Markierung auf, zu der das Brillenglas ausgerichtet wird. Ferner weist das erfindungsgemäße Meßgerät wenigstens eine verstellbare Einrichtung auf, die den Winkel mißt, der zwischen der Verbindungslinie vom nasalen Nutengrund zum temporalen Nutengrund eines Gläserrings und der Markierung eingeschlossen ist.

### Kurze Beschreibung der Zeichnung

Die Erfindung wird nachstehend ohne Beschränkung des allgemeinen Erfindungsgedankens anhand von Ausführungsbeispielen unter Bezugnahme auf die Zeichnung exemplarisch beschrieben, auf die im übrigen hinsichtlich der Offenbarung aller im Text nicht näher erläuterten erfindungsgemäßen Einzelheiten ausdrücklich verwiesen wird. Es zeigen:
- Fig. 1a und b: eine Ausführung welche nicht gegenstand der Ansprüche ist.
- Fig. 2a-c: ein Ausführungsbeispiel der Erfindung.

### Darstellung von Ausführungsbeispielen

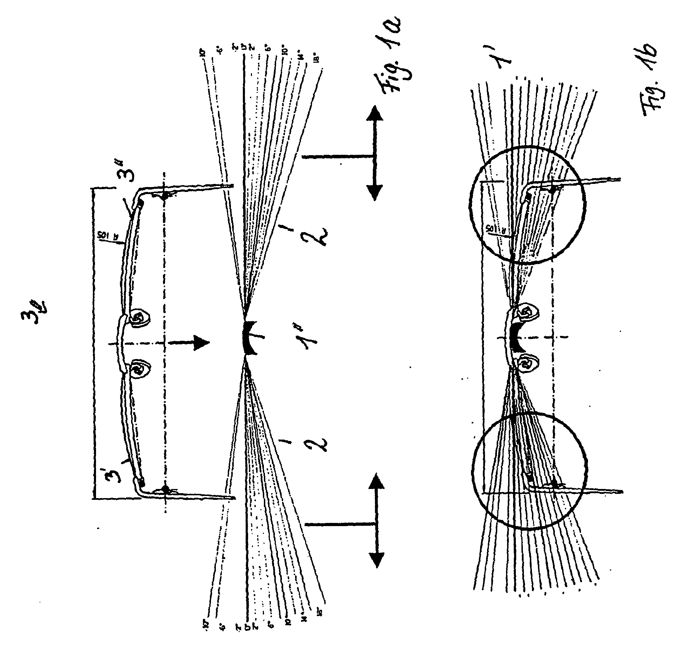

Die Fig. 1a und 1b zeigen eine Ausführung welche nicht Gegenstand der Ansprüche ist, bei der die Verkippung vor dem Auge jeder Seite der Fassung direkt gemessen wird. Bei diesem Ausführungsbeispiel sind auf einer Grundplatte zwei verstellbare Einrichtungen vorgesehen. Jede dieser beiden Einrichtungen ist ein längs der auf der Grundplatte aufgebrachten Markierung 1' horizontal verschiebbarer Winkelfächer 2. Damit ist es möglich, daß jeder Winkelfächer 2 mit seinem Ursprung auf den nasalen Nutengrund eines Gläserrings 3' bzw. 3" der Fassung 3 zentriert werden kann.

Mit der vorgenannten Ausführungs wird eine Messung wie folgt vorgenommen:

Eine beliebige Fassung 3 wird auf die Brückenauflage 1" der Grundplatte aufgelegt. Die beiden Winkelfächer 2, die horizontal verschiebbar sind, werden nun mit ihrem Ursprung auf den nasalen Nutengrund der Fassung 1 zentriert. Das Ablesen der Verkippung wird dann an dem jeweiligen temporalen Nutengrund abgelesen und zwar dort, wo dieser eine Linie des Fächers schneidet. Dies ist durch Kreise in Fig. 1b symbolisiert. Aufgrund von Augenmaß und flexibler Justierbarkeit ist eine Meßgenauigkeit von ca. ± 1° realisierbar.

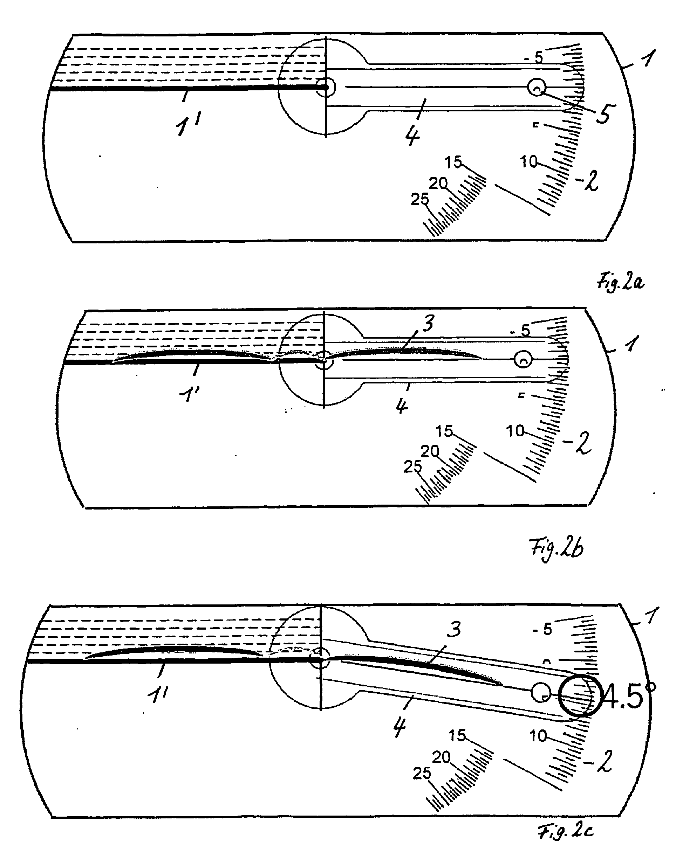

Die Figuren 2a, 2b und 2c zeigen ein Ausführungsbeispiel der Erfindung, bei dem eine vorstellbare Einrichtung vorgesehen ist, die einen Zeiger 4 aufweist, der um einen Punkt der Markierung 1' drehbar ist, und dem eine Winkelskala 2 zugeordnet ist. Der Zeiger 4 weist eine Lupe 5 zum Ablesen der Winkelskala 2 auf. Bei diesem Ausführungsbeispiel wird vorausgesetzt, daß der Augenoptiker die Korrektionsfassung so symmetrisch wie nur möglich dem Brillenträger anpassen wird. Aus diesem Grunde wird bei diesem Ausführungsbeispiel ein Kompromiß eingegangen, da lediglich die Durchbiegung der gesamten Korrektionsfassung gemessen wird. Die Verkippung der Einzelglasfassungen wird als Mittelwert aus der Verkippung einer Seite ermittelt, während die andere Seite der Brillenfassung in Null-Richtung ausgerichtet ist, das heißt mit dem nasalen und dem temporalen Nutengrund parallel auf die horizontalen Striche ausgerichtet ist. Bei der Beschriftung der Winkelskala 2 ist bereits berücksichtigt, daß die Verkippung eines Gläserrings der halbe Wert des Meßwertes ist.

Fig. 2b zeigt den Fall, daß eine Fassung 3 ohne Verkippung auf die Grundplatte 1 aufgelegt ist.

Fig. 2c zeigt den Fall, daß eine durchgebogen Fassung 3 auf die Grundplatte 1 aufgelegt ist. Hierbei ist darauf zu achten, daß der nasale Nutengrund des rechten Gläserrings im Ursprung des Meßzeigers 4 zu liegen kommt. Der Winkel der Auslenkung des Zeigers 4 beträgt in diesem Falle 9°. Die Skalierung zeigt deshalb 4,5° an, so daß dem Augenoptiker die Bestellprozedur erleichtert wird.

## Patentansprüche

1. Meßgerät zum Ermitteln des Fassungsscheibenwinkels einer Brillenfassung (3), insbesondere mit großem Fassungsscheibenwinkel, mit einem ersten Brillenglas und einem zweiten Brillenglas, mit
- einer Auflage, auf die das erste Brillenglas mit einem oberen oder einem unteren Nutengrund auflegbar ist, wobei die Auflage eine Markierung (1') umfaßt und mit
- einer verstellbaren Einrichtung, welche zum Messen eines Winkels ausgelegt ist und welche einen drehbaren Zeiger (4) aufweist, der um einen Punkt der Markierung drehbar ist und dem eine Winkelskala (2) zugeordnet ist,
**dadurch gekennzeichnet, daß**
die Markierung (1') eine Vielzahl paralleler Striche aufweist, wobei das erste Brillenglas zumindest entlang einem dieser parallelen Striche ausrichtbar ist, daß
der nasale Nutengrund des zweiten Brillenglases an dem Punkt der Markierung (1') anordenbar ist, und daß
der drehbare Zeiger (4) entlang einer Verbindung des nasalen und temporalen Nutengrundes des zweiten Brillenglases anordenbar ist und der drehbare Zeiger ausgelegt ist, den Winkel zwischen dem Zeiger und dem parallelen Strich, entlang welchem das erste Brillenglas angeordnet ist, zu messen.

2. Meßgerät nach Anspruch 1, wobei der Zeiger eine Lupe (5) zum Ablesen der Winkelskala aufweist.

## Claims

1. Measuring device for determining the frame lens angle of a spectacle frame (3), in particular with a large frame lens angle, having a first spectacle lens and a second spectacle lens, having
- a support on which the first spectacle lens can be supported with an upper or a lower groove base, the support including a marking (1') and having
- an adjustable device which is designed for measuring an angle and which has a rotatable pointer (4) which can rotate about a point of the marking and to which an angle scale (2) is assigned,
**characterised in that**
the marking (1') has a multiplicity of parallel lines, the first spectacle lens being able to be orientated at least along one of these parallel lines, **in that**
the nasal groove base of the second spectacle lens can be disposed at the point of the marking (1'), and **in that**
the rotatable pointer (4) can be disposed along a connection of the nasal and temporal groove base of the second spectacle lens and the rotatable pointer is designed to measure the angle between the pointer and the parallel line along which the first spectacle lens is disposed.

2. Measuring device according to claim 1, the pointer having a magnifying lens (5) for reading off the angle scale.

## Revendications

1. Appareil de mesure permettant de déterminer l'angle d'inclinaison de monture d'une monture de lunette (3), qui présente en particulier un angle d'inclinaison de monture important, comportant un premier verre de lunette et un deuxième verre de lunette, avec
- un support, sur lequel peut être posé le premier verre de lunette avec un fond rainuré supérieur ou inférieur, moyennant quoi le support comporte un marquage (1'), et
- un dispositif réglable, qui est configuré pour mesurer un angle, et qui présente un indicateur rotatif (4), qui peut tourner autour d'un point du marquage et est affecté à une échelle angulaire (2),
**caractérisé en ce que**
le marquage (1') présente une pluralité de traits parallèles, moyennant quoi le premier verre de lunette peut être orienté au moins le long de l'un de ces traits parallèles, **en ce que**
le fond rainuré nasal du deuxième verre de lunette peut être disposé au niveau du point du marquage (1'), et **en ce que**
l'indicateur rotatif (4) peut être agencé le long d'une liaison entre le fond rainuré nasal et temporal du deuxième verre de lunette, et l'indicateur rotatif est agencé de manière à mesurer l'angle entre l'indicateur et le trait parallèle le long duquel est disposé le premier verre de lunette.

2. Appareil de mesure selon la revendication 1, dans lequel l'indicateur présente une loupe (5) permettant de lire l'échelle angulaire.
